Europäisches Patentamt

European Patent Office

Office européen des brevets

(11) Publication number: **0 200 695 B1**

## EUROPEAN PATENT SPECIFICATION

(45) Date of publication of patent specification: **02.09.92**   (51) Int. Cl.5: **B01D 53/34**

(21) Application number: **86850134.7**

(22) Date of filing: **15.04.86**

(54) Contact reactor.

(30) Priority: **23.04.85 SE 8501970**

(43) Date of publication of application:
**05.11.86 Bulletin 86/45**

(45) Publication of the grant of the patent:
**02.09.92 Bulletin 92/36**

(84) Designated Contracting States:
**AT BE CH DE FR GB IT LI LU NL SE**

(56) References cited:
**DE-A- 2 116 996      SE-B- 416 380**
**SE-B- 422 006      SE-B- 427 423**
**SE-B- 427 529      SE-B- 429 010**
**SE-B- 429 724**

(73) Proprietor: **ABB FLÄKT AB**
**Sickla Allé 13**
**S-Nacka(SE)**

(72) Inventor: **Carlsson, Kurt**
**Högtorpsvägen 136**
**S-352 42 Växjö(SE)**

(74) Representative: **Lindblom, Erik J.**
**Flotthamn**
**S-150 23 Enhörna(SE)**

Rank Xerox (UK) Business Services

## Description

The present invention relates to a vertical contact reactor through which a contaminated medium, normally a contaminated gas flow, is passed, and to which there is supplied an absorbent capable of reacting with the contaminants carried by the medium, and which incorporates means for mixing the contaminated medium and the absorbent together.

## BACKGROUND PRIOR ART

When a contaminated medium has the form of a contaminated gas flow, it is known, when practising totally dry methods and even when practising wet-dry methods, in contact reactors of this kind to carry out the actual gas-cleansing process at temperatures which lie as close as possible to the dew-point of the gas concerned. By lowering the temperature in this regard it is possible to moisten slightly the dust or contaminants present in the gas and therewith improve absorption and render the reaction between the absorbent and the acid components more effective.

It has also been established that a low working temperature during the actual gas cleansing process improves the extent to which gaseous heavy metals and various organic components are extracted from the gas.

Those experiments which have already been carried out in practice show unequivocally that when cleansing a gas in accordance with the aforegoing there is found a lowest temperature limit at which the gas can be cleansed with simple means.For example, if the temperature of the gas falls beneath this lowest temperature limit, the water content of the dust increases and eventually becomes so high as to make it impossible to handle the dust in a dry state.

It has also been established that when sulphur dioxide is absorbed with the aid of slaked lime, the dew-point temperature of the gas constitutes a lower limitation of the working temperature.

It is well known that the composition of gases generated in incinerators or waste combustion plants is highly complex, and that hydrogen chloride predominates among the acid compounds to be removed.

The hydrogen chloride together with the calcium hydrate present forms calcium chloride which is extremely hygroscopic and since the water absorption factor of this salt increases with decreasing temperature, the working temperature is limited downwards.

It is also known in this particular art to conduct flue gases along the outer surfaces of the flue ducts or conduits prior to introducing the flue gases into the contact reactor, in order to heat the walls of the ducts and therewith avoid the formation of dust deposits on the inner surfaces of the walls.

An example of this technique is described and illustrated in Swedish Published Specification No. 441,151.

This published specification describes a contact reactor in which certain wall sections are heated with the aid of the incoming hot gas, in order to prevent the formation of deposits on the inner surfaces of the wall sections.

It is also disclosed in said publication that acid or other harmful substances present in the flue gases downstream of an incinerator or combustion means can be neutralized by introducing along a contact path in a section of a flue-gas conduit, with the aid of spray nozzles, a neutralizing medium comprising, for example, a suspension of solid basic particles, such as a lime/water suspension.

The published specification also discloses that the flue gas is passed through an annular passageway and then deflected through 180° , so that the gas is able to pass through an inner conduit previously heated by the flue gases.

A vertical contact reactor, as stated in the preamble of claim 1 can be considered as previously known in the publication GB-A-1 483 959 (SE-B-416 380) in which is described that the contaminated medium or gas flows upwardly and passing along a side, turning 180° and passing downwardly. By a nozzle arrangement is the gas passing a small space downwardly and at the bottom the gas is turning again 180°.

## SUMMARY OF THE INVENTION

### TECHNICAL PROBLEMS

When considering the present state of the art as discussed in the aforegoing it will be seen that a technical problem resides in providing within a vertical contact reactor, with the aid of simple constructive measures, conditions which enable coarse contaminants to be extracted from a gas flow before the reaction in the reactor chamber can commence. This is of particular importance when recycling absorbent material, since recycling requires the absence of coarse particles.

A further technical problem is one of creating with the aid of simple constructive measures conditions which enable coarse contaminants to be separated from a gas flow, by deflecting a downwardly directed circulating gas flow upwardly through 180°.

Another technical problem resides in the provision of simple means which enable wall sections located in a reactor chamber adjacent turbulence-generating means to be heated by a flow of hot gas while the remaining sections of the reactor chamber, downstream of the turbulence-generating means, are under a cooling effect.

Experience has shown that in contact reactors of this kind, the aforementioned build-up of dust deposits does not commence until excessively low gas temperatures are reached, and consequently it is highly desirable that the wall temperature does not fall beneath a predetermined level, despite liquid being added in order to increase the reactivity of the absorbent. The provision of conditions which satisfy this need constitutes a further technical problem in the present context.

A further technical problem resides in the provision of conditions which will enable flue gases to be cleansed in several stages in a single contact reactor, these stages consisting of a first stage in which coarse contaminants are extracted from the gas in a cyclone separator, a second stage in which the gas is cleansed with the aid of a slurry; and a third stage in which the gas is cleansed with the aid of a powderous absorbent; and also in the provision of conditions which enable the powderous absorbent to be used and recycled more effectively.

SOLUTION

The present invention relates generally to a vertical contact reactor as stated in the preamble of claim 1.

It is particularly proposed in accordance with the invention that a narrowing section is incorporating a turbulence-generating means, provided downstream of the chamber, and that powdered-absorbent supply means are located downstream of the turbulence-generating means.

Other embodiments of the present invention are stated in the subclaims.

ADVANTAGES

Those advantages primarily afforded by a contact reactor constructed in accordance with the present invention reside in the possibility of cleansing a contaminated medium in a multiple of stages, incorporating a first stage in which coarse particulate contaminants are extracted from the medium in a cyclone separator, a second stage effected in a chamber in which a finely divided liquid or a slurry is brought into contact with the medium and the wall sections of which chamber are heated so as to prevent the build-up of particulate absorbent on the surfaces thereof, and a third stage in which the medium is further cleansed with a dry absorbent powder. In addition hereto, conditions are created in which turbulence is generated prior to supplying the powdered material.

BRIEF DESCRIPTION OF THE DRAWINGS

A preferred embodiment of the invention having features characteristic of the present invention will now be described in more detail with reference to the accompanying drawings in which;

Figure 1    is a schematic, sectional side-view illustrating a gas cleansing plant of principally known construction; and

Figure 2    is a sectional side-view of a vertical contact reactor constructed in accordance with the invention and capable of being incorporated in the plant illustrated in Figure 1.

DESCRIPTION OF A PREFERRED EMBODIMENT

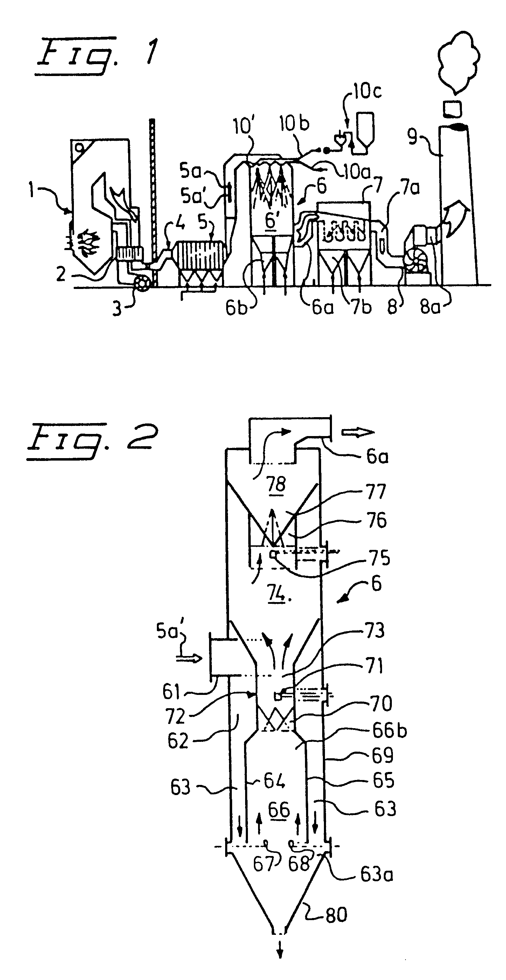

Figure 1 is a schematic sectional side-view illustrating a gas cleansing plant of principally known construction for illustration purposes.

The complex illustrated in Figure 1 includes a boiler house 1 and a heat exchanger 2 which is constructed for use with hot flue gases and which is adapted to transfer heat from the gases to furnace air of combustion, supplied to the boiler by means of a fan 3.

The flue gases pass through a conduit 4 to an electrostatic precipitator 5 which is connected to a contact reactor 6 by a duct or conduit 5a. A flow of contaminated gas 5a' passes through the duct 5a and into the contact reactor 6. The contaminants carried by the gas may be in particle form or in gas form, such as hydrogen chloride, sulphur dioxide for example.

Arranged in the upper part of the contact reactor 6, which operates in accordance with wet-dry gas-cleansing principles, is a number of nozzle assemblies 10' in which a first medium, in the form of air, entering through a pipe 10a, is mixed with a second medium in the form of lime particles suspended in water, entering through a pipe 10b connected to a lime and water mixer 10c. The mixture produced in respective mixing nozzle assemblies and comprising air and an aqueous lime suspension for absorptive reaction with the contaminants in said flow of contaminated medium is introduced into the medium flow through one or more of the aforesaid nozzle assemblies 10'.

The partially cleansed medium, or gas flow, passes from the contact reactor to a hose filter 7, through a pipe 6a. The medium is further cleansed in the hose filter 7, and is then passed through a duct or pipe 7a to a fan 8, which drives the cleansed gases through a pipe 8a and out through a chimney or smoke stack 9.

Thus, the flue gases cleansed in a number of mutually separate stages are discharged through the smoke stack or chimney 9 with the aid of said fan 8.

In Figure 2 there is illustrated a contact reactor 6 which is constructed in accordance with the invention and in which the gas is cleansed in accordance with dry-method principles, which reactor can be used to advantage in the gas cleansing plant according to Figure 1.

Thus, Figure 2 illustrates a contact reactor through which there is passed a contaminated medium 5a', or gas flow, and into which there is introduced an absorbent capable of reacting with the contaminants carried by the medium, this medium being referred to hereinafter as the contaminated gas flow.

The contaminated gas flow 5a' enters the contact reactor through a tangential inlet 61, which in this embodiment comprises a connector stub, located at the midpoint of the reactor and flows into a cylindrical chamber or space 62, which merges with a narrower cylindrical slot-like space 63.

The gas flow 5a' circulates within the chamber and eventually moves down through the slot-like space 63 passes the wall sections 64,65 while delivering part of its heat content thereto.

The wall-sections 64,65 define therebetween a reactor chamber 66, into which a finely-divided liquid or slurry is introduced through nozzles 67,68. As illustrated by the arrows in Figure 2, the gas enters the reactor chamber 66 through the bottom thereof, after transferring part of its heat content to the wall sections 64,65.

Liquid or slurry is introduced into the reactor chamber through the nozzles 67,68 for the purpose of cooling the gas or for absorbing contaminants carried thereby into said chamber, which acts as an evaporating zone, so that the temperature slightly exceeds the dew-point temperature.

The inner surfaces of the wall-sections 64,65 shall be heated to a temperature well above the dew-point temperature of the gas flowing into the reactor chamber 66, in order to reduce, or even to eliminate, the build-up of dust deposits on the inner surfaces of said wall sections.

As clearly illustrated in Figure 2, the high-temperature gas entering the contact reactor first passes the outer surfaces of the wall-sections 64,65 while delivering part of its heat content to said outer surfaces, and is then turned or deflected through 180° and enters the reactor chamber 66 in a slightly cooled state.

As will be seen from Figure 2, the wall-sections 64,65 define a cylindrical or substantially cylindrical space in which there prevails a temperature sufficiently high to vaporize liquid and/or slurry passing through the nozzles 67,68, which are located at the bottom 63a of the slot-like space 63.

It will also be seen from Figure 2 that the cylindrical slot-like space 63 surrounding the wall-sections 64,65 is defined outwardly by the inner surface of contact-reactor mantle or shell 69, the diameter of which is substantially equal to the diameter of the space or chamber 62 into which the gas first enters the reactor through the tangential inlet 61. Gas circulating in the chamber 62 eventually becomes crowded and as a result moves rapidly down through the slot-like space 63, means being located at the bottom 63a of the space 63 for mixing and turning the gas flow into the chamber 66.

As the gas flow leaves the slot-like space 63 and turns to enter the reactor chamber 66, coarse contaminants carried by the gas fall down into a collecting bin or pre-separator 80 located beneath the space 63.

The nozzles 67,68 or means for supplying liquid and/or slurry to the reactor chamber for cooling and/or absorbing the contaminated medium or the contaminants carried thereby are arranged to direct a jet of liquid or a curtain of liquid upwardly into the reactor chamber 66, the nozzles 67,68 being located downstream and immediately adjacent the region at which the gas flow is forced to turn through 180°.

The upper part 66b of the reactor chamber 66 narrows and incorporates turbulence-generating means 70.

Located immediately downstream of the turbulence-generating means 70 is a first means 71 for supplying powdered absorbent. The turbulence-generating means 70 and the first powdered-absorbent supply means 71 are formed in a tubular element 72 located centrally in the reactor chamber 62, which has a large cross-sectional area in relation to the cross-sectional area of the slot-like space 63.

Arranged downstream of the first supply means 71 is a mixing zone 73 and downstream of the mixing zone 73 there is provided a reaction section 74, the cross-sectional area of said section corresponding to the cross-sectional area of the reactor mantle or shell 69.

The downstream located part of the reaction section 74 incorporates a second supply means 75 for supplying powdered absorbent. Located downstream of the second supply means 75 is a turbulence-generating means 76 and a mixing section 77, and also a further reaction section 78, in which the gas is further cleansed prior to being discharged through an outlet 6a.

As before mentioned, a pre-separator 80 intended for extracting coarse contaminants is arranged beneath the nozzles or means 67,68 for introducing liquid and/or slurry into the reactor chamber.

In order to minimize the consumption of alkali, it is important that separated material containing unused alkali can be recycled. This recycling of material is most often effected subsequent to slurrying with water in the case of wet-dry methods, and subsequent to intermediate storage of the material in the case of a totally dry method. It is desirable in both cases to recycle as much non-reacted material as possible, and therewith minimize the extent to which inert material is recycled from the combustion process. To this end, it is proposed that the aforesaid pre-separator 80 is located between the combustion process and the reactor.

With regard to the construction of the turbulence-generating means 70 and 76, reference is made to the arrangement illustrated and described in EP-A-0 185632 (European Patent Application 85850382.4, filed 26 November 1985).

Thus, Figure 2 illustrates a contact reactor adapted to operate in accordance with the wet-dry method and to operate in several stages in accordance with the fully dry method.

It will be understood from the aforegoing that the gas flow 5a' is arranged to first sink down through the outer region of the contact reactor, i.e. the slot-like space 63, and to then turn and rise through the whole of the central region of the contact reactor.

Consequently, the gas-flow inlet 61 is located in or substantially in the midway point of the reactor.

It will be understood that the invention is not restricted to the aforedescribed embodiment and that modifications can be made within the scope of the following claims.

The coarse particles are separated as in a cyclone separator and falling down while the gas is ejected into the reactor chamber by the nozzles 67 and 68 and passing in the direction upwards in the chamber 66.

**Claims**

1. A vertical contact reactor for treating contaminated medium with absorbent, wherein the interior of said reactor incorporates wall sections (64,65), which define a longitudinally extending open-ended reactor chamber (66), a contaminated medium inlet (61) being arranged to introduce said medium into a space (62,63), which surrounds said reactor chamber (66), the cross-sectional area of said space being larger in the region of the inlet (61) than in the region of said wall sections (64,65) to impart a higher flow velocity and nozzles (67,68) being provided for introducing finely divided liquid or absorbent slurry into the reactor chamber,

   **characterized** in that,

the inlet (61) is tangentially arranged at the upper region of said space (62,63) whereby the medium flows downwardly from the inlet, around the reactor chamber (66) and then reverses upwardly through 180° into the lower end of the reactor chamber providing conditions which enable coarse contaminants to be extracted from the flow, the arrangement also affording a heat transfer between the medium flowing in the space (62,62) and said wall sections and that downstream of the reactor chamber (66) there is provided a narrowing section (66b), incorporating a turbulence generating means (70), downstream of which there is located means (71) for introducing powdered absorbent.

2. A contact reactor according to Claim 1, **characterized** in that the liquid or the slurry is arranged to be introduced into the chamber (66) through nozzle means (67,68) located in or immediately adjacent the location at which the medium flow (5a') is turned through 180°.

3. A contact reactor according to Claim 1, characterized in that the wall sections (64,65) are arranged to define a cylindrical or substantially cylindrical chamber (66) serving as a vaporizing zone for the aforesaid liquid and/or slurry.

4. A contact reactor according to Claim 1 or Claim 3, characterized in that the wall sections (64,65) are encircled by a slot-like space (63) defined by said wall sections and a contact-reactor related mantle or shell (69), which is operative in conducting the contaminated medium (5a') in a downward direction.

5. A contact reactor according to Claim 1, 3 or 4, characterized in that the medium (5a') is arranged to be introduced via an inlet (61) into a space (62) of large circular cross-section; in that the medium (5a') is then permitted to pass said slot-like space (63), via a rotational movement;and in that nozzle means (67,68) are provided adjacent the bottom of the slot-like space for turning the flow of medium into the chamber (66), the wall sections (63,64) of which are heated; and in that means are provided for removing coarse contaminants.

6. A contact reactor according to Claim 1, characterized in that the nozzle means (67,68) for supplying liquid and/or slurry for cooling the contaminated medium and absorbing the contaminant carried thereby are arranged to direct a curtain of liquid upwardly into the chamber (66); and in that said nozzle means is located downstream adjacent the region (63a) in which the flow of medium is turned.

7.  A contact reactor according to Claim 1, characterized in that said first means (71), for supplying a powdered absorbent, is located immediately downstream of said turbulence-generating means (70).

8.  A contact reactor according to Claim 1, 5 or 7, characterized in that the turbulence-generating means (70) and the first powdered-absorbent supply means (71) are formed in a tubular element (72) surrounded by said space (62) of large cross-sectional area.

9.  A contact reactor according to Claim 7, characterized in that a mixing zone (73) is provided downstream of the first supply means (71), and in that a reaction section (74) of large cross-sectional area is located downstream of the mixing zone.

10. A contact reactor according to Claim 9, characterized in that the downstream part of the reaction section (74) incorporates a second means (75) for supplying powdered absorbent.

11. A contact reactor according to Claim 10, characterized in that arranged downstream of the second supply means (75) is a turbulence-generating means (76), a mixing section (77), and a further reaction section (78).

12. A contact reactor according to Claim 1, characterized in that a pre-separator (80) for coarse contaminants is arranged beneath the nozzle means (67,68) for supplying liquid and/or slurry.

13. A contact reactor according to Claim 1, characterized in that the flow of medium (5a') is first arranged to be conducted downwardly, via a rotational movement, and then upwardly, so as to rise through the whole of the contact reactor while being cleansed therein.

14. A contact reactor according to Claim 1, 5 or 13, characterized in that said inlet (61) for the flow of contaminated medium (5a') is located at least substantially at the midway point of the contact reactor.

**Patentansprüche**

1.  Vertikale Kontakt-Reaktor-Vorrichtung zur Behandlung von einem verunreinigten Medium mit einem Absorbtionsmittel, wobei das Innere der Reaktor-Vorrichtung Wandabschnitte (64, 65) enthält, die eine sich längs erstreckende Reaktorkammer (66) mit einem Offenen Ende definieren, einem Einlaß (61) für das verunreinigte Medium, der zur Einführung des Mediums in einen Raum (62, 63) hinein angeordnet ist, der die Reaktorkammer (66) umgibt, wobei die Querschnittsfläche des Raumes in dem Bereich des Einlasses (61) größer ist als in dem Bereich der Wandabschnitte (64, 65), um eine höhere Flußgeschwindigkeit zu erzeugen, und Düsen (67, 68), die vorgesehen sind, um fein verteilte Flüssigkeit oder absorbierenden Schlamm in die Reaktorkammer einzuleiten,

dadurch **gekennzeichnet**, daß

der Einlaß (61) in dem oberen Bereich des Raumes (62, 63) tangential angeordnet ist, wodurch das Medium von dem Einlaß nach unten fließt, um die Reaktorkammer (66) herum und sich dann um 180° nach oben in das untere Ende der Reaktorkammer umdreht, wobei Bedingungen bereitgestellt werden, die es erlauben, grobe Verunreinigungen aus dem Fluß zu extrahieren, wobei die Anordnung auch einen Wärmeübergang zwischen dem in dem Raum (62, 62) fließenden Medium und den Wandabschnitten erlaubt und daß stromab der Reaktorkammer (66) ein sich verjüngender Abschnitt (66b) vorgesehen ist, der eine Wirbelerzeugungseinrichtung (70) enthält, wobei stromab davon eine Einrichtung (71) zur Einführung eines pulverisierten Absortionsmittels angeordnet ist.

2.  Kontakt-Reaktor-Vorrichtung nach Anspruch 1, dadurch **gekennzeichnet,** daß die Flüssigkeit oder der Schlamm angeordnet ist, um durch eine Düsen-Einrichtung (67, 68) in die Kammer (66) eingeführt zu werden, die sich an oder unmittelbar benachbart der Stelle befindet, an dem der Mediumfluß (5a') um 180° gedreht wird.

3.  Kontakt-Reaktor-Vorrichtung nach Anspruch 1, dadurch **gekennzeichnet,** daß die Wandabschnitte (64, 65) so angeordnet sind, um eine zylindrische oder im wesentlichen zylindrische Kammer (66) zu definieren, die als eine Verdampfungszone für die obige Flüssigkeit und/oder den Schlamm dient.

4.  Kontakt-Reaktor-Vorrichtung nach Anspruch 1 oder 3, dadurch **gekennzeichnet**, daß die Wandabschnitte (64, 65) von einem schlitzartigen Raum (63) umgeben sind, der durch die Wandabschnitte und einen sich auf die Kontakt-Reaktor-Vorrichtunb beziehenden Mantel oder Hülle (6) definiert ist, der so arbeitet, um das verunreinigte Medium (5a') in eine Richtung nach unten zu führen.

5. Kontakt-Reaktor-Vorrichtung nach Anspruch 1, 3 oder 4,
dadurch **gekennzeichnet**, daß das Medium (5a') so angeordnet ist, um durch einen Einlaß (61) in einen Raum (62) hinein eines großen kreisförmigen Querschnitts eingeführt zu werden; dadurch daß ermöglicht wird, daß das Medium (5a') durch eine Drehbewegung den schlitzartigen Raum (63) passiert; und dadurch, daß eine Düseneinrichtung (67, 68) in der Nähe des Bodens des schlitzartigen Raumes vorgesehen ist, um den Mediumfluß in die Kammer (66) hinein zu drehen, deren Wandabschnitte (63, 64) beheizt sind; und dadurch daß eine Einrichtung vorgesehen ist, um grobe Verunreinigungen zu entfernen.

6. Kontakt-Reaktor-Vorrichtung nach Anspruch 1, dadurch **gekennzeichnet,** daß die Düseneinrichtung (67, 68) zur Zuführung von Flüssigkeit und/oder Schlamm zum Kühlen des verunreinigten Mediums und zum Absorbieren der dadurch mitgeführten Verunreinigung so angeordnet ist, um einen Vorhang von Flüssigkeit in die Kammer (66) nach oben hineinzurichten; und dadurch daß die Düseneinrichtung stromab benachbart zu dem Bereich (63a) angeordnet ist, in dem der Mediumfluß gedreht wird.

7. Kontakt-Reaktor-Vorrichtung nach Anspruch 1, dadurch **gekennzeichnet**, daß sich die erste Einrichtung (71) zur Zuführung eines pulverisierten Absorbtionsmittels unmittelbar stromab der Wirbelerzeugungseinrichtung (70) befindet.

8. Kontakt-Reaktor-Vorrichtung nach Anspruch 1, 5 oder 7,
dadurch **gekennzeichnet**, daß die Wirbelerzeugungseinrichtung (70) und die erste Zuführungseinrichtung (71) für das pulverisierte Absorbtionsmittel in einem röhrenförmigen Element (72) gebildet werden, das den Raum (62) einer großen Querschnittsfläche umgibt.

9. Kontakt-Reaktor-Vorrichtung nach Anspruch 7, dadurch **gekennzeichnet,** daß eine Mischzone (73) stromab der ersten Zuführungseinrichtung (71) vorgesehen ist, und daß sich ein Reaktionsabschnitt (74) einer großen Querschnittsfläche stromab der Mischzone befindet.

10. Kontakt-Reaktor-Vorrichtung nach Anspruch 9, dadurch **gekennzeichnet,** daß der Teil stromab des Reaktionsabschnittes (74) eine zweite Einrichtung (75) zur Zuführung eines pulverisierten Absorbtionsmittels enthält.

11. Kontakt-Reaktor-Vorrichtung nach Anspruch 10,
dadurch **gekennzeichnet,** daß stromab der zweiten Zuführungseinrichtung (75) eine Wirbelerzeugungseinrichtung (76), ein Mischabschnitt (77) und ein weiterer Reaktionsabschnitt (78) angeordnet sind.

12. Kontakt-Reaktor-Vorrichtung nach Anspruch 1, dadurch **gekennzeichnet,** daß ein Vor-Separator (80) für grobe Verunreinigungen unterhalb der Düseneinrichtung (67, 68) angeordnet ist, um Flüssigkeit und/oder Schlamm zuzuführen.

13. Kontakt-Reaktor-Vorrichtung nach Anspruch 1, dadurch **gekennzeichnet,** daß der Mediumfluß (5a') zuerst so angeordnet ist, um durch eine Drehbewegung nach unten geleitet zu werden, und dann nach oben um durch die gesamte Kontakt-Reaktor-Vorrichtung aufzusteigen, während es darin gereinigt wird.

14. Kontakt-Reaktor-Vorrichtung nach Anspruch 1, 5 oder 13,
dadurch **gekennzeichnet,** daß sich der Einlaß (61) für den Fluß von verunreinigtem Medium (5a') wenigstens im wesentlichen am Mittelbereichspunkt der Kontakt-Reaktor-Vorrichtung befindet.

**Revendications**

1. Réacteur vertical de contact pour traiter un milieu contaminé avec un absorbant, dans lequel l'intérieur dudit réacteur incorpore des sections de paroi (64,65), qui définissent une chambre de réacteur à extrémités ouvertes s'étendant dans le sens longitudinal (66), une entrée de milieu contaminée (61) étant disposés pour introduire ledit milieu dans un espace (62,63), qui entoure ladite chambre de réacteur (66), la zone en section transversale dudit espace étant plus grande dans la région de l'entrée (61) que dans la région desdites sections de paroi (64,65) pour impartir une vitesse d'écoulement plus élevée, et des tuyères (67,68) étant prévues pour introduire un liquide divisé finement ou de la boue absorbante dans la chambre de réacteur,
caractérisé en ce que,

l'entrée (61) est disposée tangentiellement dans la région supérieure dudit espace (62,63), par quoi le milieu s'écoule vers le bas depuis l'entrée, autour de la chambre de réacteur (66) et est inversé ensuite vers le haut de 180° dans l'extrémité inférieure de la chambre de réacteur, en fournissant des conditions qui permettent l'extraction de contaminants grossiers de l'écoulement, le dispositif fournissant également un transfert de chaleur entre le milieu s'écoulant dans l'espace (62,63) et lesdites sections de paroi, et qu'en aval de la chambre de réacteur (66), il est prévu une section rétrécie (66b) incorporant un moyen de production de turbulence (70), en aval duquel sont placés des moyens (71) pour introduire l'absorbant en poudre.

2. Réacteur de contact selon la revendication 1, caractérisé en ce que le liquide ou la boue est disposé pour être introduit dans la chambre (66) par des moyens formant tuyères (67,68) situées dans ou immédiatement adjacents à l'emplacement auquel l'écoulement de milieu (5a') tourné de 180°.

3. Réacteur de contact selon la revendiction 1, caractérisé en ce que les sections de paroi (64,65) sont disposées pour définir une chambre cylindrique ou sensiblement cylindrique (66) servant de zone vaporisante pour le liquide et/ou la boue précités.

4. Réacteur de contact selon la revendication 1 ou la revendication 3, caractérisé on ce que les sections de paroi (64,65) sont encerclées par un espace en forme de fente (63) défini par lesdites sections de paroi et une chemise ou coquille (69) rapportée au réacteur de contact, qui fonctionne pour conduire le milieu contaminé (5a') dans une direction vers le bas.

5. Réacteur de contact selon la revendication 1, 3 ou 4, caractérisé en ce que le milieu (5a') est disposé pour être introduit via une entrée (61) dans un espace (62) d'une section transversale circulaire importante; en ce que le milieu (5a') peut ensuite passer à travers ledit espace en forme de fente (63), via un mouvement rotationnel; et en ce que des moyens formant tuyères (67,68) sont prévus adjacents au fond de l'espace en forme de fente pour faire tourner l'écoulement du milieu dans la chambre (66), dont les sections de paroi (63,64) sont chauffées; et en ce que des moyens sont prévus pour retirer des contaminants grossiers.

6. Réacteur de contact selon la revendication 1, caractérisé en ce que les moyens formant tuyères (67,68) pour fournir un liquide et/ou de la boue pour refroidir le milieu contaminé et absorber le contaminant porté par celui-ci sont disposés pour diriger un rideau de liquide vers le haut dans la chambre (66); et en ce que ledit moyen formant tuyère est situé en aval adjacent à la région (63a) dans laquelle l'écoulement du milieu est tourné.

7. Réacteur de contact selon la revendication 1, caractérisé en ce que ledit premier moyen (71) pour fournir un absorbant en poudre est situé immédiatement en aval dudit moyen produisant de la turbulence (70).

8. Réacteur de contact selon la revendication 1, 5 ou 7, caractérisé en ce que le moyen de production de turbulence (70) et le premier moyen d'amenée d'absorbant en poudre (71) sont réalisés dans un élément tubulaire (72) entouré par ledit espace (62) d'une zone de section transversale importante.

9. Réacteur de contact selon la revendication 7, caractérisé en ce qu'une zone de mélange (73) est prévue en aval du premier moyen d'amenée (71), et en ce qu'une section de réaction (74) d'une zone de section transversale importante est placée en aval de la zone de mélange.

10. Réacteur de contact selon la revendication 9, caractérisé en ce que la partie en aval de la section de réaction (74) incorpore un second moyen (75) pour fournir de l'absorbant en poudre.

11. Réacteur de contact selon la revendication 10, caractérisé en ce que, en aval du deuxième moyen d'amenée (75) est prévu un moyen de production de turbulence (76), une section de mélange (77), et une section de réaction supplémentaire (78).

12. Réacteur de contact selon la revendication 1, caractérisé en ce qu'un pré-séparateur (80) pour des contaminants grossiers est disposé en dessous du moyen formant tuyère (67, 68) pour fournir un liquide et/ou de la boue.

13. Réacteur de contact selon la revendication 1, caractérisé en ce que l'écoulement du milieu (5a') est d'abord disposé pour être conduit vers le bas, via un mouvement rotationnel, et ensuite vers le haut, de façon à s'élever à travers l'ensemble du réacteur du contact pendant qu'il est nettoyé à l'intérieur de celui-ci.

**14.** Réacteur de contact selon la revendication 1, ou 13, caractérisé en ce que ladite entrée (61) pour l'écoulement du milieu contaminé (5a') est située au moins sensiblement au point à mi-chemin du réacteur de contact.

Fig. 1

Fig. 2